(19) **Europäisches Patentamt / European Patent Office / Office européen des brevets**

(11) **EP 4 098 625 A1**

(12) **EUROPEAN PATENT APPLICATION**

(43) Date of publication:
**07.12.2022 Bulletin 2022/49**

(21) Application number: **22158858.5**

(22) Date of filing: **25.02.2022**

(51) International Patent Classification (IPC):
**C01G 53/00** (2006.01)     **H01M 4/00** (2006.01)

(52) Cooperative Patent Classification (CPC):
**C01G 53/42; H01M 4/366; H01M 4/505; H01M 4/525;** C01P 2002/52; C01P 2004/50; C01P 2004/61; C01P 2006/40; H01M 10/052

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.06.2021 KR 20210070990**

(71) Applicant: **Samsung SDI Co., Ltd.**
**Yongin-si, Gyeonggi-do 17084 (KR)**

(72) Inventors:
  • **KONG, Youngsun**
    **17084 Yongin-si (KR)**

  • **AHN, Kiyong**
    **17084 Yongin-si (KR)**
  • **KWON, Seonyoung**
    **17084 Yongin-si (KR)**
  • **KIM, Min Ju**
    **17084 Yongin-si (KR)**
  • **LEE, Dookyun**
    **17084 Yongin-si (KR)**
  • **JUN, Dowook**
    **17084 Yongin-si (KR)**
  • **HONG, Kijoo**
    **17084 Yongin-si (KR)**

(74) Representative: **Marks & Clerk LLP**
    **15 Fetter Lane**
    **London EC4A 1BW (GB)**

(54) **POSITIVE ACTIVE MATERIAL FOR RECHARGEABLE LITHIUM BATTERY, METHOD OF PREPARING THE SAME, AND RECHARGEABLE LITHIUM BATTERY INCLUDING THE SAME**

(57)    Disclosed are a positive active material including a nickel-based composite metal oxide that is secondary particles in which a plurality of primary particles are agglomerated, wherein the positive active material includes a core and a shell, the primary particles of the shell are coated with a manganese-containing nickel-based composite metal oxide, and the manganese-containing nickel-based composite metal oxide has a layered structure.

FIG. 1

EP 4 098 625 A1

## Description

## BACKGROUND

### 1. Field

A positive active material for a rechargeable lithium battery, a method of preparing the same, and a rechargeable lithium battery including the same are disclosed.

### 2. Description of the Related Art

In order to meet down-sizing and high performance of various devices, rechargeable lithium batteries have become increasingly important in terms of high energy density as well as down-sizing and weight reduction. In addition, high capacity and high temperature stability of rechargeable lithium batteries, and safety at a high voltage become important to apply to electric vehicles and the like.

Various positive active materials have been investigated to realize rechargeable lithium batteries for applications to the uses.

Nickel-based lithium transition metal oxide simultaneously including Ni, Co, Mn, and the like provides high discharge capacity per unit weight, compared with conventional $LiCoO_2$, but has relatively low capacity and discharge capacity per unit volume due to low packing density. In addition, safety of the nickel-based lithium transition metal oxide may be deteriorated, when driven at a high voltage.

Accordingly, a method for improving structural stability and cycle-life of the nickel-based lithium transition metal oxide is required.

## SUMMARY

An embodiment provides a positive active material having improved structural stability and effective for improving cycle-life of a rechargeable lithium battery.

Another embodiment provides a method of preparing the positive active material.

Another embodiment provides a rechargeable lithium battery having improved charge/discharge efficiency and cycle-life characteristics by employing a positive electrode including the positive active material.

An embodiment provides a positive active material including a nickel-based composite metal oxide that is secondary particles in which a plurality of primary particles are agglomerated, wherein the positive active material (e.g. the nickel-based composite metal oxide) includes a core and a shell, the primary particles of the shell are coated with a manganese-containing nickel-based composite metal oxide, and the manganese-containing nickel-based composite metal oxide has a layered structure.

The core may not include manganese.

A manganese concentration may have a concentration gradient in which it increases from the inside to the surface of the primary particle of the shell.

The coating of manganese coated on the shell (e.g. on the primary particles of the shell) may be in an island form or in a fine nanoparticle form.

The content of manganese in the positive active material may be less than about 1.5 mol%, for example with respect to the manganese-containing nickel-based composite metal oxide of the shell.

A thickness of the shell may be less than or equal to about 2 $\mu$m.

The positive active material may have a particle diameter of about 8 $\mu$m to about 18 $\mu$m.

The manganese-containing nickel-based composite metal oxide may be represented by Chemical Formula 1:

[Chemical Formula 1] $LiNi_{1-x-y-z}Co_xMn_yM_zO_2$

In Chemical Formula 1,
$0 \leq x \leq 0.5$, $0.001 \leq y < 0.015$, $0 \leq z \leq 0.3$, and M is at least one metal element selected from Ni, Al, Cr, Fe, V, Mg, Ti, Zr, Nb, Mo, W, Cu, Zn, Ga, In, Sn, La, B, Ta, Pr, Si, Ba, and Ce.

$LiMnO_2$ may be included on the surface of the primary particle of the shell.

In an embodiment, the positive active material may be prepared by the following method:

a water-soluble solvent is added to a nickel composite metal compound and a manganese hydroxide to prepare a mixture,
the mixture is reacted at about 40 °C to about 100 °C for about 30 minutes to about 1 hour to coat the primary particles of the shell with manganese, and

mixing the coated resulting material with a lithium source and firing the same.

The nickel composite metal compound may be a nickel composite metal oxide or a nickel composite metal hydroxide.

The water-soluble solvent may include any one of NaOH, KOH, and mixtures thereof.

After reacting the mixture at about 40 °C to about 100 °C for about 30 minutes to about 1 hour, the mixture may be dried at about 100 °C to about 200 °C, for example, the method may further include an act of drying the mixture at about 100 °C to about 200 °C after the act of reacting the mixture.

A firing temperature may be about 600 °C to about 800 °C and a firing time may be about 8 hours to about 30 hours or about 8 hours to about 24 hours.

Another embodiment provides a rechargeable lithium battery including a positive electrode including the positive active material, a negative electrode including a negative active material, and an electrolyte.

At least some of the above and other features of the invention are set out in the claims.

Other specific details of embodiments are included in the detailed description below.

The positive active material does not include the nickel-based composite metal oxide of a spinel structure, but includes the nickel-based composite metal oxide of the layered structure alone, thereby solving the problem of a decrease in specific capacity caused by the inclusion of the spinel structure.

In addition, the rechargeable lithium battery including the positive electrode including the positive active material according to the embodiment exhibits improved charge and discharge efficiency and cycle-life characteristics.

## BRIEF DESCRIPTION OF THE DRAWINGS

FIG. 1 is a schematic cross-sectional view showing a positive active material according to an embodiment.

FIG. 2 is a perspective view schematically illustrating a typical structure of a rechargeable lithium battery.

FIG. 3 shows the evaluation results of cycle-life (100 cycles) of the coin cells of Example 1 and Comparative Examples 1 to 4.

## DETAILED DESCRIPTION

Hereinafter, embodiments are described in detail. However, these are provided as examples, and the present disclosure is not limited thereto, and the present disclosure is only defined by the scope of the claims to be described later.

As used herein, when a specific definition is not otherwise provided, it will be understood that when an element such as a layer, film, region, or substrate is referred to as being "on" another element, it can be directly on the other element or intervening elements may also be present.

In the present disclosure, the "particle size" or "particle diameter" may be defined as the average particle diameter (D50) based on about 50% of the volume cumulative amount in the particle size-distribution curve. The particle diameter may be, for example, measured by an electron microscopy examination using scanning electron microscopy (SEM) or field emission scanning electron microscopy (FE-SEM), or a laser diffraction method. It may be measured by the laser diffraction method as follows. The particles to be measured are dispersed in a dispersion medium and then introduced into a commercially available laser diffraction particle size measuring apparatus (for example, MT 3000 of Microtrac), ultrasonic waves of about 28 kHz are irradiated with an output of about 60 W, and an average particle diameter (D50) in 50% reference of the particle size distribution in a measuring apparatus may be calculated.

In the present specification, the "center" means a point that bisects the longest axis of a particle.

The "primary particle" may be a crystalline particle or a grain. A plurality of the primary particles forms grain boundaries and is agglomerated together to form a secondary particle, wherein the primary particles may have various shapes such as a spherical shape or a similar spherical shape (a flake shape and the like).

The "secondary particle" refers to a particle that comprises the plurality of the primary particles but is not an agglomerate of other particles or a particle that is no longer agglomerated and may have a spherical shape or a pseudo spherical shape.

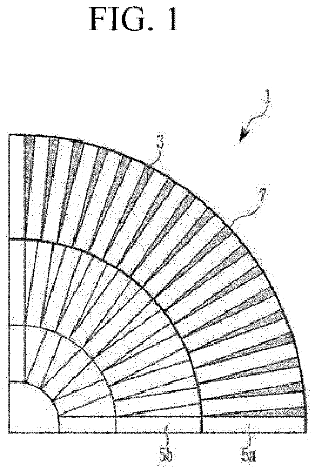

Hereinafter, a positive active material for a rechargeable lithium battery is described with reference to FIG. 1. FIG. 1 is a schematic cross-sectional view showing a positive active material including primary particles coated at a grain boundary according to an embodiment.

Referring to FIG. 1, a positive active material according to an embodiment includes a nickel-based composite metal oxide including secondary particles 1 in which a plurality of primary particles 3 are agglomerated.

The secondary particle 1 includes a core 5b and a shell 5a, and the shell 5a includes a nickel-based composite metal oxide including manganese coated on a grain boundary 7 of a plurality of primary particles 3 (hereinafter, also referred to as a manganese-containing nickel-based composite metal oxide). That is, the positive active material may include a manganese-containing nickel-based composite metal oxide coated at a grain boundary between the primary particles 3 of the shell 5a corresponding to a predetermined depth. Herein, the core 5b of the secondary particle 1 may not include the manganese-containing nickel-based composite metal oxide. In other words, the core 5b may not include manganese. That is, the manganese-containing nickel-based composite metal oxide may be coated only on the grain boundaries of the primary particles 3 in the shell 5a of the secondary particles 1, and manganese may not be coated in the core 5b.

The core 5b of the secondary particle 1 may refer to a region of less than or equal to about 50 length% to less than or equal to about 80 length% from the center, for example of less than or equal to about 75 length% from the center, less than or equal to about 70 length%, less than or equal to about 65 length%, less than or equal to about 60 length%, less than or equal to about 55 length%, or less than or equal to about 50 length% with respect to a total distance (100 length%) from the center to the outermost surface of the secondary particle 1 or a region excluding the region within about 2 μm from the outermost surface of the secondary particle 1.

The shell 5a is a portion excluding the core 5b, and a region of less than or equal to about 20 length% from the outermost surface to less than or equal to about 50 length%, for example less than or equal to about 25 length%, less than or equal to about 30 length%, less than or equal to about 35 length%, less than or equal to about 40 length%, less than or equal to about 45 length%, or less than or equal to about 50 length% from the outermost surface with respect to the total distance (100 length%) from the center to the outermost surface.

That is, the thickness of the shell 5a may be less than or equal to about 2 μm, and specifically, the thickness of the shell 5a may be less than or equal to about 2 μm, less than or equal to about 1.5 μm, less than or equal to about 1.0 μm, or less than or equal to about 0.5 μm.

The shell 5a may be a region in which coating of the primary particles 3 at the grain boundaries is formed. In an embodiment, the size of the primary particles 3 may be about 50 nm to about 800 nm or about 100 nm to about 800 nm. The size of the primary particles 3 may be greater than or equal to about 50 nm, greater than or equal to about 100 nm, greater than or equal to about 150 nm, greater than or equal to about 200 nm, greater than or equal to about 250 nm, greater than or equal to about 300 nm, greater than or equal to about 350 nm, greater than or equal to about 400 nm, greater than or equal to about 450 nm, greater than or equal to about 500 nm, greater than or equal to about 550 nm, greater than or equal to about 600 nm, greater than or equal to about 650 nm, greater than or equal to about 700 nm, or greater than or equal to about 750 nm. In another embodiment, the size of the primary particle 3 may be less than or equal to about 800 nm, less than or equal to about 750 nm, less than or equal to about 700 nm, less than or equal to about 650 nm, less than or equal to about 600 nm, less than or equal to about 550 nm, less than or equal to about 500 nm, less than or equal to about 450 nm, less than or equal to about 400 nm, less than or equal to about 350 nm, less than or equal to about 300 nm, less than or equal to about 250 nm, less than or equal to about 200 nm, or less than or equal to about 150 nm.

The manganese-containing nickel-based composite metal oxide has a layered structure. When the nickel-based composite metal oxide of the positive active material has a spinel structure, there is an effect of increasing stability, but since the nickel-based composite metal oxide of the spinel structure occupies a larger capacity in the positive active material than the nickel-based composite metal oxide of the layered structure, as the nickel-based metal composite oxide of the spinel structure is more included, there may be a problem of deteriorating specific capacity of the positive active material.

Accordingly, the present invention provides a positive active material for a rechargeable lithium battery having excellent stability and high specific capacity by including not the nickel-based composite metal oxide of the spinel structure but the nickel-based composite metal oxide of the layered structure, so that the nickel-based composite metal oxide of the layered structure may be included between the primary particles included in the shell of the positive active material with a core-shell structure.

In other words, in the secondary particle 1, the manganese-containing nickel-based composite metal oxide of the layered structure alone may be included, but a compound with a spinel structure or a compound with a rock salt structure may not be included at all. When the compound with the spinel structure is not included in the secondary particle 1, the problem of specific capacity deterioration due to the spinel structure included in the positive active material may be solved.

The shell 5a includes the manganese-containing nickel-based composite metal oxide of the layered structure between the primary particles 3 (i.e., grain boundaries), and manganese present in the grain boundaries 7 of a plurality of the primary particles 3 in the shell 5a may be included in a larger content than manganese coated inside the primary particles 3. In other words, the manganese-containing nickel-based composite metal oxide included in the shell 5a may have a manganese concentration gradient increasing from the inside of the primary particle 3 to the surface.

The "grain boundary" means an interface of two adjacent primary particles 3. In an embodiment, the grain boundary may mean a region of less than or equal to about 20 length% from the outermost surface based on the total distance from a center of the primary particle 3 to the outermost surface (the interface between the adjacent primary particles 3) to a region of less than or equal to about 40 length% from the outermost surface, for example, a region of less than or equal to about 25 length% from the outermost surface, a region of less than or equal to about 30 length% from the outermost surface, or a region of less than or equal to about 35 length% from the outermost surface. The inside of the primary particle 3 means a portion excluding the grain boundary. In an embodiment, the inside of the primary particle 3 may mean a region of less than or equal to about 60 length% from the center of the primary particle 3 to less than or equal to about 80 length% from the center of the primary particle 3, based on the total distance from the center of the primary particle to the outermost surface (the interface between adjacent primary particles 3), for example, less than or equal to about 40 length% from the center of the primary particle, less than or equal to about 45 length% from the center of the primary particle, less than or equal to about 50 length% from the center of the primary particle, less than or equal to about 55 length% from the center of the primary particle, less than or equal to about 60 length% from the center of the primary particle, less than or equal to about 65 length% from the center of the primary particle, less than or equal to about 70 length% from the center of the primary particle, less than or equal to about 75 length% from the center of the primary particle, or less than or equal to about 80 length% from the center of the primary particle.

The manganese-containing nickel-based composite metal oxide coated on the primary particle 3 of the shell 5a may be coated in an island form or a fine nanoparticle form. The 'fine nanoparticle' may be spherical, rod, needle, or plate-shaped particles with a particle size of about 10 nm to about 100 nm.

In an embodiment, the manganese-containing nickel-based composite metal oxide may include manganese in an amount of greater than or equal to about 0.1 mol% and less than about 1.5 mol% based on the total amount (mol%) of the metals (hereinafter, metals except lithium) of the nickel-based composite metal oxide. When the positive active material includes manganese in an amount of greater than or equal to about 0.1 mol% and less than about 1.5 mol% based on the total amount (mol%) of the metals of the nickel-based composite metal oxide, structural stability and cycle characteristics of the positive active material may be improved.

In an embodiment, the manganese content may be greater than or equal to about 0.1 mol%, greater than or equal to about 0.2 mol%, greater than or equal to about 0.3 mol%, greater than or equal to about 0.4 mol%, greater than or equal to about 0.5 mol%, greater than or equal to about 0.6 mol%, greater than or equal to about 0.7 mol%, greater than or equal to about 0.8 mol%, greater than or equal to about 0.9 mol%, greater than or equal to about 1.0 mol%, greater than or equal to about 1.1 mol%, greater than or equal to about 1.2 mol%, greater than or equal to about 1.3 mol%, or greater than or equal to about 1.4 mol%, and less than about 1.5 mol%, less than or equal to about 1.4 mol%, less than or equal to about 1.3 mol%, less than or equal to about 1.2 mol%, less than or equal to about 1.1 mol%, less than or equal to about 1.0 mol%, less than or equal to about 0.9 mol%, less than or equal to about 0.8 mol%, less than or equal to about 0.7 mol%, less than or equal to about 0.6 mol%, less than or equal to about 0.5 mol%, less than or equal to about 0.4 mol%, less than or equal to about 0.3 mol%, or less than or equal to about 0.2 mol% based on the total amount (mol%) of the metals (metals except lithium) of the manganese-containing nickel-based composite metal oxide.

As described above, the positive active material according to the embodiment includes a nickel-based composite metal oxide which contains manganese in a high concentration between the primary particles present in the shell 5a to a certain depth from the outermost surface of the secondary particles 1. This embodiment may be different from a conventional configuration of coating the surface of a secondary particle or doping deep down to a core of the secondary particle and improve specific capacity of the positive active material by coating manganese only on the grain boundary of the primary particle down to a predetermined depth from the outermost surface.

In addition, since the manganese-containing nickel-based composite metal oxide 7 (nickel-based lithium metal oxide) is included in the grain boundary of the primary particle 3, lithium may be smoothly diffused from a core 5b of the secondary particle 5, but elution of nickel ions may be suppressed from the core 5b of the secondary particle 5. In addition, the primary particles of the core 5b of the secondary particle 5 may be suppressed from a side reaction with an electrolyte solution. Accordingly, cycle characteristics of a rechargeable lithium battery including the positive active material with the above structure may be improved.

In addition, the manganese-containing nickel-based composite metal oxide 7 disposed on the grain boundary of the adjacent primary particles 3 may accommodate a volume change of the primary particles according to the charge and discharge and suppress cracks between the primary particles and thus mechanical strength deterioration of the positive active material after the longterm charge and discharge and accordingly, prevent degradation of a rechargeable lithium battery. In addition, the manganese is coated on the primary particle 3 and thus stabilizes a crystal structure of the nickel-based metal composite oxide, much improving cycle characteristics of a rechargeable lithium battery including the positive active material.

The manganese-containing nickel-based composite metal oxide may be represented by Chemical Formula 1:

[Chemical Formula 1]    $LiNi_{1-x-y-z}Co_xMn_yM_zO_2$

In Chemical Formula 1,
$0 \leq x \leq 0.5$, $0.001 \leq y < 0.015$, $0 \leq z \leq 0.3$, and M is at least one metal element selected from Ni, Al, Cr, Fe, V, Mg, Ti, Zr, Nb, Mo, W, Cu, Zn, Ga, In, Sn, La, B, Ta, Pr, Si, Ba, and Ce.

In an embodiment, the compound of Chemical Formula 1 may be $LiNi_{1-x-y}Co_xMn_yO_2$, or $LiNi_{1-x-y-z}Co_xMn_yAl_zO_2$.

Since the manganese-containing nickel-based composite metal oxide contains nickel in a high content, capacity may be maximized. When the nickel is included in a high content, there may be a problem of a low cycle-life despite high capacity, but when manganese is included in a predetermined content, the problem of the low cycle-life may be solved.

In an embodiment, y of Chemical Formula 1 may be in the range of $0.001 \leq y < 0.015$. In an embodiment, the manganese-containing nickel-based composite metal oxide 7 may be $Li[(NiCoAl)_{0.995}Mn_{0.005}]O_2$, $Li[(NiCoAl)_{0.99}Mn_{0.01}]O_2$, $Li[(NiCoAl)_{0.986}Mn_{0.014}]O_2$, or a combination thereof (wherein, in these formulae, the molar amounts of Ni, Co, and Al are not necessarily equal, but are described in shorthand to focus on the amount of manganese).

In an embodiment, lithium manganese oxide may be further included in the grain boundary 7 of the primary particles 3 of the shell 5a, and the lithium manganese oxide may be $LiMnO_2$.

A particle diameter (D50) of the positive active material may be about 8 $\mu$m to about 18 $\mu$m. Specifically, the particle diameter of the positive active material may be greater than or equal to about 8 $\mu$m, greater than or equal to about 9 $\mu$m, greater than or equal to about 10 $\mu$m, greater than or equal to about 11 $\mu$m, greater than or equal to about 12 $\mu$m, greater than or equal to about 13 $\mu$m, greater than or equal to about 14 $\mu$m, greater than or equal to about 15 $\mu$m, greater than or equal to about 16 $\mu$m, or greater than or equal to about 17 $\mu$m, and less than or equal to about 18 $\mu$m, less than or equal to about 17 $\mu$m, less than or equal to about 16 $\mu$m, less than or equal to about 15 $\mu$m, less than or equal to about 14 $\mu$m, less than or equal to about 13 $\mu$m, less than or equal to about 12 $\mu$m, less than or equal to about 11 $\mu$m, less than or equal to about 10 $\mu$m, or less than or equal to about 9 $\mu$m.

The positive active material may be prepared according to the following preparation method.

First, a manganese compound is mixed with a nickel-based composite metal compound including secondary particles in which a plurality of primary particles are agglomerated.

The nickel-based composite metal compound may be a nickel composite metal oxide or a nickel composite metal hydroxide, and in an embodiment, the nickel-based composite metal compound may be a compound represented by Chemical Formula 2 or Chemical Formula 3:

[Chemical Formula 2]  $Ni_{1-x-y}Co_xM_y(OH)_2$

In Chemical Formula 2,
$0 \leq x \leq 0.5$, $0 \leq y \leq 0.3$, and M is at least one metal elements selected from Ni, Al, Cr, Fe, V, Mg, Ti, Zr, Nb, Mo, W, Cu, Zn, Ga, In, Sn, La, B, Ta, Pr, Si, Ba, and Ce,

[Chemical Formula 3]  $Ni_{1-x-y}Co_xM_yO_2$

In Chemical Formula 3,
$0 \leq x \leq 0.5$, $0 \leq y \leq 0.3$, and M is at least one metal element selected from Ni, Al, Cr, Fe, V, Mg, Ti, Zr, Nb, Mo, W, Cu, Zn, Ga, In, Sn, La, B, Ta, Pr, Si, Ba, and Ce.

The compound represented by Chemical Formula 2 may be $Ni_{1-x}Co_x(OH)_2$, or $Ni_{1-x-y}Co_xAl_y(OH)_2$, and the compound represented by Chemical Formula 3 may be $Ni_{1-x}Co_xO_2$, or $Ni_{1-x-y}Co_xAl_yO_2$.

The manganese compound may be manganese hydroxide ($Mn(OH)_2$).

When mixing the nickel-based composite metal compound and the manganese compound, a water-soluble solvent is added and mixed by a wet mixing method. This is because there is a high probability that the manganese compound will be present on the surface of the shell rather than the grain boundary of the primary particles of the shell of the nickel-based composite metal compound during dry mixing.

The water-soluble solvent may include any one of NaOH, KOH, and mixtures thereof.

After mixing the nickel-based composite metal compound and the manganese compound, the mixture is reacted in a coating reactor to uniformly distribute manganese at the grain boundaries of the primary particles of the shell of the nickel-based composite metal compound, that is, to coat the primary particles of the shell with manganese.

The temperature of the coating reactor ranges from about 40 °C to about 100 °C, specifically, for example, greater than or equal to about 40 °C, greater than or equal to about 50 °C, greater than or equal to about 60 °C, greater than or equal to about 70 °C, greater than or equal to about 80 °C, or greater than or equal to about 90 °C, and less than and equal to about 100 °C, less than or equal to about 90 °C, less than or equal to about 80 °C, less than or equal to about 70 °C, less than or equal to about 60 °C, or less than or equal to about 50 °C. In an embodiment, the reactor temperature may be maintained uniformly during the reaction.

The reaction time is about 30 minutes to about 1 hour.

The method may further include drying the reacted mixture, to produce a nickel-based composite metal compound having a core-shell structure in which a manganese-containing nickel-based composite metal compound shell is formed on a nickel-based composite metal compound core.

The drying temperature may be about 100 °C to about 200 °C, about 120 °C to about 180 °C, or about 140 °C to about 160 °C.

Thereafter, a lithium source is mixed with the coated resultant material and fired to obtain a positive active material that is a nickel-based composite metal oxide. The lithium source may be LiOH, $Li_2CO_3$, or a hydrate thereof.

The firing temperature may range from about 600 °C to about 800 °C, or specifically greater than or equal to about 600 °C, greater than or equal to about 620 °C, greater than or equal to about 640 °C, greater than or equal to about 660 °C, greater than or equal to about 680 °C, greater than or equal to about 700 °C, greater than or equal to about 720 °C, greater than or equal to about 740 °C, greater than or equal to about 760 °C, or greater than or equal to about 780 °C, and less than and equal to about 800 °C, less than or equal to about 780 °C, less than or equal to about 760 °C, less than or equal to about 740 °C, less than or equal to about 720 °C, less than or equal to about 700 °C, less than or equal to about 680 °C, less than or equal to about 660 °C, less than or equal to about 640 °C, or less than or equal to about 620 °C.

The firing time may be about 8 hours to about 30 hours, about 8 hours to about 24 hours, or about 10 hours to about 24 hours.

Herein, the nickel-based composite metal compound may be fired at a temperature of about 500 °C to about 800 °C in addition to the firing process.

In another embodiment, a rechargeable lithium battery includes a positive electrode including the positive active material, a negative electrode including a negative active material; and an electrolyte.

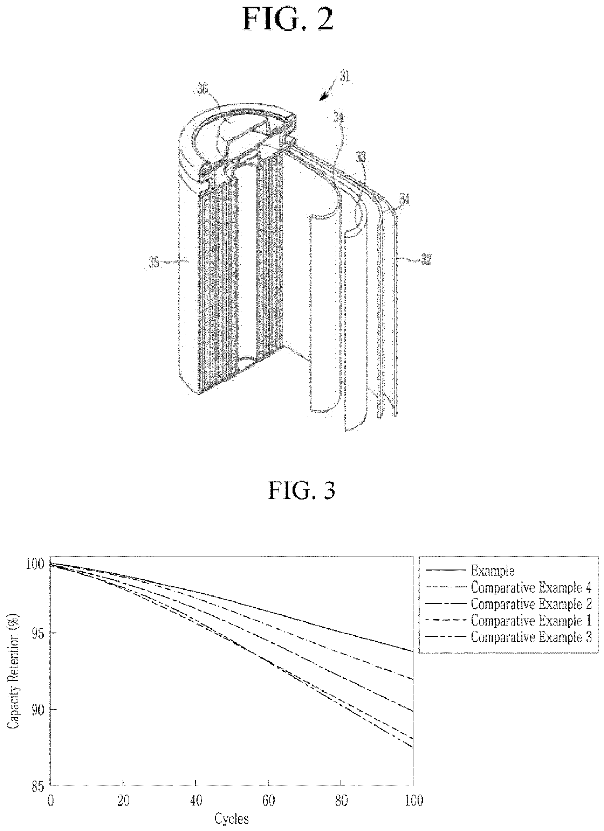

Hereinafter, a rechargeable lithium battery according to an embodiment is described with reference to the drawings. FIG. 2 is a perspective view schematically illustrating a typical structure of a rechargeable lithium battery according to an embodiment.

Referring to FIG. 2, the rechargeable lithium battery 31 includes a positive electrode 33 including the positive active material according to an embodiment, a negative electrode 32, and a separator 34. The aforementioned positive electrode 33 including the positive active material, negative electrode 32, and separator 34 are wound or folded and accommodated in the battery case 35. Then, the organic electrolyte is injected into the battery case 35 and sealed using the cap assembly 36 to complete the rechargeable lithium battery 31. The battery case 35 may have a cylindrical shape, a square shape, a thin film shape, or the like.

The rechargeable lithium battery may be a lithium ion battery.

The positive electrode and the negative electrode are manufactured by applying a composition for forming a positive active material layer and a composition for forming a negative active material layer on a current collector, respectively, and drying the same.

The composition for forming the positive active material is prepared by mixing a positive active material, a conductive agent, a binder, and a solvent, and the positive active material is as described above.

The binder may help binding between the active materials, conductive agent, and/or the like as well as binding these materials on a current collector, and non-limiting examples of the binder may be polyvinylidene fluoride, polyvinyl alcohol, carboxylmethyl cellulose (CMC), starch, hydroxypropyl cellulose, recycled cellulose, polyvinylpyrrolidone, polytetrafluoroethylene, polyethylene, polypropylene, an ethylene-propylene-diene terpolymer (EPDM), sulfonated EPDM, a styrene butadiene rubber, a fluorine rubber, various copolymers, and/or the like. The binder may be included in an amount of about 1 part by weight to 5 parts by weight based on the total weight, 100 parts by weight of the positive active material. When the amount of the binder is within this range, the binding force of the active material layer to the current collector may be suitable or good.

The conductive agent is not particularly limited as long as it does not cause a chemical change of a battery, and has conductivity. Non-limiting examples of the conductive agent may include graphite such as natural graphite and/or artificial graphite; a carbon-based material such as carbon black, acetylene black, Ketjen black, channel black, furnace black, lamp black, summer black, and/or the like; a conductive fiber such as a carbon fiber and/or a metal fiber, and/or the like; carbon fluoride; a metal powder such as an aluminium and/or nickel powder; zinc oxide, a conductive whisker such as potassium titanate, and/or the like; a conductive metal oxide such as a titanium oxide; and a conductive material such as a polyphenylene derivative, and/or the like. The amount of the conductive agent may be about 1 part by weight to about 5 parts by weight based on the total weight of 100 parts by weight of the positive active material. When the amount of the conductive agent is within this range, the conductivity characteristics of the resultant electrode may be improved.

Non-limiting examples of the solvent may be N-methyl pyrrolidone, and/or the like. The amount of the solvent may be about 1 part by weight to about 10 parts by weight based on the total weight of 100 parts by weight of the positive active material. When the amount of the solvent is within this range, the active material layer may be easily formed.

The positive current collector may have a thickness of about 3 μm to about 500 μm. The material for the positive current collector is not particularly limited as long as it does not cause a chemical change in the battery and has high conductivity, and may be for example, stainless steel, aluminium, nickel, titanium, heat-treated carbon, and/or aluminium or stainless steel that is surface treated with carbon, nickel, titanium, and/or silver. The current collector may have fine irregularities formed on its surface to increase adhesion to the positive active material, and may be provided in any suitable form such as a film, a sheet, a foil, a net, a porous body, foam, and/or a non-woven fabric body.

Separately, a negative active material, a binder, a conductive agent, CMC (carboxymethyl cellulose), and a solvent may be mixed to prepare a composition for forming a negative active material layer. The negative active material may be or include a material capable of intercalating and deintercalating lithium ions. Non-limiting examples of the negative active material may be a carbon-based material such as graphite and/or carbon, a lithium metal, an alloy thereof, a silicon oxide-based material, and/or the like. In some embodiments, silicon oxide may be used.

The binder and solvent may be substantially the same as available for the positive electrode. The CMC may be used as a thickener to assist adhesion and to control viscosity during coating. The binder may be added in an amount of about 1 part by weight to about 5 parts by weight based on the total weight, 100 parts by weight of the negative active material. The CMC is used in an amount of about 1 part by weight to about 5 parts by weight based on the total weight, 100 parts by weight of the negative active material. When the amount of CMC is within the above range, adhesion and coating properties may be improved. The solvent may be used in an amount of about 10 parts by weight to about 200 parts by weight based on the total weight, 100 parts by weight of the negative active material. When the amount of the solvent is within this range, the negative active material layer may be easily formed.

The negative current collector may have a thickness of about 3 $\mu$m to about 500 $\mu$m. The material for the negative current collector is not particularly limited as long as it does not cause a chemical change in the battery and has high conductivity. Non-limiting examples may include copper; stainless steel; aluminium; nickel; titanium; heat-treated carbon; copper and/or stainless steel surface-treated with carbon, nickel, titanium, and/or silver; an aluminiumcadmium alloy; and/or the like. The negative current collector may have fine irregularities formed on the surface to increase the adhesion to the negative active materials, and may be provided in any suitable form (such as a film, a sheet, a foil, a net, a porous body, foam, and/or a non-woven fabric body), similar to the positive current collector

A separator may be disposed between the positive electrode and the negative electrode to be wound or laminated to form an electrode assembly. The separator may have a pore diameter of about 0.01 $\mu$m to about 10 $\mu$m, and a thickness of about 5 $\mu$m to about 300 $\mu$m. Specific examples thereof may include an olefin-based polymer such as polypropylene, polyethylene, and the like; or a sheet or a nonwoven fabric formed of a glass fiber. When a solid electrolyte such as a polymer is used as the electrolyte, the solid electrolyte may also serve as the separator.

When the electrode assembly is accommodated in a case, an electrolyte is injected, and the resultant obtained is sealed, a rechargeable lithium battery is completed. The electrolyte may be a non-aqueous electrolyte including a non-aqueous solvent and a lithium salt, an organic solid electrolyte, an inorganic solid electrolyte, and the like. The non-aqueous electrolyte may be or include, for example, an aprotic organic solvent, for example, N-methyl-2-pyrrolidinone, propylene carbonate, ethylene carbonate, butylene carbonate, dimethyl carbonate, diethyl carbonate, gamma-butyrolactone, 1,2-dimethoxyethane, 2-methyl tetrahydrofuran, dimethylsulfoxide, 1,3-dioxolane, formamide, N,N-dimethyl formamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, a propylene carbonate derivative, a tetrahydrofuran derivative, ether, methyl propionate, ethyl propionate, and the like. The lithium salt may be a material that is readily soluble in the non-aqueous solvent, and non-limiting examples thereof may be selected from $LiPF_6$, $LiBF_4$, $LiSbF_6$, $LiAsF_6$, $LiN(SO_2C_2F_5)_2$, $Li(CF_3SO_2)_2N$, $LiN(SO_3C_2F_5)_2$, $Li(FSO_2)_2N$ (lithium bis(fluorosulfonyl)imide), LiFSI), $LiC_4F_9SO_3$, $LiClO_4$, $LiAlO_2$, $LiAlCl_4$, $LiPO_2F_2$, $LiN(C_xF_{2x+1}SO_2)(C_yF_{2y+1}SO_2)$, wherein, x and y are natural numbers, for example an integer ranging from 1 to 20, lithium difluoro(bisoxolato) phosphate, LiCl, LiI, $LiB(C_2O_4)_2$ (lithium bis(oxalato) borate, LiBOB), and lithium difluoro(oxalato)borate (LiDFOB).

Non-limiting examples of the organic solid electrolyte may be a polyethylene derivative, a polyethylene oxide derivative, a polypropylene oxide derivative, a phosphoric acid ester polymer, polyester sulfide, polyvinyl alcohol, polyvinylidene fluoride, and the like

Non-limiting examples of the inorganic solid electrolyte may be $Li_3N$, LiI, $Li_5NI_2$, $Li_3N$-LiI-LiOH, $Li_2SiS_3$, $Li_4SiO_4$, $Li_4SiO_4$-LiI-LiOH, $Li_3PO_4$-$Li_2S$-$SiS_2$, and the like.

Also, the rechargeable lithium battery can be composed of a circuit to form a battery pack, and a single or multiple pack may be used for all devices requiring high capacity and high power as needed. For example, it may be used for a laptop, a smart phone, electric vehicle and the like. In addition, the rechargeable lithium battery has excellent storage stability, cycle-life characteristics, and highrate characteristics at high temperatures, and thus may be used in an electric vehicle (EV). For example, it may be used for a hybrid vehicle such as a plugin hybrid electric vehicle (PHEV).

The present disclosure is explained in more detail in the following examples and comparative examples. It is to be understood, however, that the examples are for the purpose of illustration and are not to be construed as limiting the present disclosure.

Example 1

(Preparation of Positive Active Material)

In a reactor into which nickel-based composite metal hydroxide ($Ni_{0.94}Co_{0.04}Al_{0.02}(OH)_2$) and distilled water were put, after supplying N2 gas at 4000 sccm, an aqueous solution in the reactor was stirred at 300 rpm to 600 rpm, while maintained at 45 °C. Subsequently, manganese hydroxide at a concentration of 2 M and a 5.5 M NaOH aqueous solution were continuously added to the reactor for 30 minutes to 1 hour. While the temperature in the reactor was maintained at 50 °C to 80 °C, the mixture was stirred for 30 minutes to coat 1 mol% of manganese on the nickel-based composite metal hydroxide. Subsequently, the coated product was dried in a vacuum drier at 150 °C, obtaining nickel-based composite metal hydroxide with a core-shell structure of having a nickel-based composite metal hydroxide core and a manganese-containing nickel-based composite metal hydroxide shell thereon. Herein, the manganese was included in an amount of 1 mol% based on the total amount of metals excluding lithium in the shell.

Subsequently, the nickel-based composite metal hydroxide with a core-shell structure and lithium hydroxide were mixed in a mole ratio of 1:1 and then, fired at 720 °C for 12 hours, obtaining positive active material powder including a $Li[Ni_{0.94}C0_{0.04}Al_{0.02}]O_2$ core and a $Li[Ni_{0.93}Co_{0.04}Al_{0.02}Mn_{0.01}]O_2$ shell.

(Manufacture of Positive Electrode)

94 wt% of the positive active material, 3 wt% of ketjen black, and 3 wt% of polyvinylidene fluoride were mixed in an N-methyl pyrrolidone solvent, preparing positive active material slurry. The positive active material slurry was coated on an Al film and then, dried and compressed, manufacturing a positive electrode.

(Manufacture of Coin Cell)

The manufactured positive electrode, a lithium metal as a counter electrode, a PTFE separator, and a solution in which 1.15 M $LiPF_6$ was dissolved in a mixed solvent of EC (ethylene carbonate), DEC (diethyl carbonate), and EMC (ethylmethylcarbonate) (in a volume ratio of 3:4:3) as an electrolyte were used to manufacture a coin cell.

**Example 2**

(Preparation of Positive Active Material)

In a reactor into which nickel-based composite metal oxide ($Ni_{0.94}Co_{0.04}Al_{0.02}O_2$) and distilled water were put, after supplying N2 gas at 4000 sccm, an aqueous solution in the reactor was stirred at 300 rpm to 600 rpm, while maintained at 45 °C. Subsequently, manganese hydroxide at a concentration of 2 M and a 5.5 M NaOH aqueous solution were continuously added to the reactor for 30 minutes to 1 hour. While the reactor was maintained at 50 °C to 70 °C, the obtained mixture was stirred for 30 minutes to coat 1 mol% of manganese on the nickel-based composite metal oxide. Subsequently, the coated product was dried at 150 °C in a vacuum drier, obtaining nickel-based composite metal oxide with a core-shell structure of a nickel-based composite metal oxide core and a manganese-containing nickel-based composite metal oxide shell formed thereon. Herein, the manganese was included in an amount of 1 mol% based on the total amount of metals excluding lithium in the shell.

Subsequently, the nickel-based composite metal oxide with a core-shell structure and lithium hydroxide were mixed in a mole ratio of 1:1 and fired at 720 °C for 12 hours, obtaining positive active material powder including a $Li[Ni_{0.94}Co_{0.04}Al_{0.02}]O_2$ core and a $Li[Ni_{0.93}Co_{0.04}Al_{0.02}Mn_{0.01}]O_2$ shell.

(Manufacture of Positive Electrode)

94 wt% of the positive active material, 3 wt% of ketjen black, and 3 wt% of polyvinylidene fluoride were mixed in an N-methyl pyrrolidone solvent, preparing positive active material slurry. The positive active material slurry was coated on an Al film and then, dried and compressed, manufacturing a positive electrode.

(Manufacture of Coin Cell)

The positive electrode, a lithium metal as a counter electrode, a PTFE separator, and a solution in which 1.15 M $LiPF_6$ was prepared in a mixed solvent of EC (ethylene carbonate), DEC (diethyl carbonate), and EMC (ethylmethyl carbonate) (in a volume ratio of 3:4:3) as an electrolyte to manufacture a coin cell.

**Comparative Example 1**

A positive active material was prepared according to the same method as the examples except that the manganese hydroxide aqueous solution was not added, and then, a positive electrode and a coin cell were manufactured by using the same.

**Comparative Example 2**

A positive active material was prepared according to the same method as Example 1 except that the nickel-based composite metal hydroxide ($Ni_{0.94}Co_{0.04}Al_{0.02}(OH)_2$) and the manganese hydroxide were dry-mixed, and then, a positive electrode and a coin cell were manufactured by using the same.

**Comparative Example 3**

A positive active material was prepared according to the same method as Example 1 except that 1 mol% of Mn was coated, but the coating was performed through stirring for 1 hour and 30 minutes in a reactor, a resultant therefrom was dried and then, mixed with lithium hydroxide in a mole ratio of 1:1, the mixture was fired at 720 °C for 24 hours to dope Mn down to a core, and then, a positive electrode and a coin cell were manufactured by using the same.

**Comparative Example 4**

A positive active material was prepared according to the same method as Example 1 except that 1.5 mol% of Mn was coated, and then, a positive electrode and a coin cell were manufactured by using the same.

**Evaluation 1.** Evaluation of Initial Charge/Discharge Capacity and Charge/Discharge Efficiency

The coin cells according to Examples 1 and 2 and Comparative Examples 1 to 4 were once charged and discharged at 0.2 C and then, measured with respect to charge capacity, discharge capacity, and charge and discharge efficiency. The results are shown in Table 1.

(Table 1)

| | Charge capacity (mAh/g) | Discharge capacity (mAh/g) | Charge and discharge efficiency (%) |
|---|---|---|---|
| Example 1 | 245.5 | 223.9 | 91.2% |
| Example 2 | 244.8 | 223.0 | 91.1% |
| Comparative Example 1 | 244.7 | 220.7 | 90.2% |
| Comparative Example 2 | 240.6 | 219.0 | 91.0% |
| Comparative Example 3 | 244.1 | 218.3 | 89.4% |
| Comparative Example 4 | 243.5 | 219.3 | 90.1% |

As shown in Table 1, the coin cell of Example 1 exhibited excellent charge and discharge capacity and also, excellent charge and discharge efficiency, compared with the coin cells of Comparative Examples 1 to 4.

**Evaluation** 2. Evaluation of Cycle Life Characteristics

The coin cells according to Example 1 and Comparative Examples 1 to 4 were constant current-charged at a current rate of 1.0 C to a voltage of 4.30 V (vs. Li) and subsequently, cut off at a current rate of 0.05 C in the constant voltage mode, while the 4.30 V was maintained, at 45 °C. Subsequently, the coin cells were constant current-discharged down to a voltage of 3.0 V (vs. Li) at a current rate of 1.0 C, which was regarded as one cycle and repeated up to 50th cycles. In all the charge and discharge cycles, a pause of 10 minutes was set after every charge/discharge cycle. The coin cells were measured with respect to a cycle-life (capacity retention) at the 100th cycle, and the results are shown in Table 2 and FIG. 3.

The capacity retention was calculated according to Equation 1:

[Equation 1]

$$\text{Capacity retention rate at } 100^{th} \text{ cycle [\%]} = [\text{Discharge capacity at } 100^{th} \text{ cycle / Discharge capacity at } 1^{st} \text{ cycle}] \times 100 \text{ [\%]}$$

(Table 2)

|  | Example 1 | Comparative Example 1 | Comparative Example 2 | Comparative Example 3 | Comparative Example 4 |
|---|---|---|---|---|---|
| Cycle-life 100 cycles | 94.0% | 88.2% | 90.0% | 87.6% | 92.1% |

As shown in Table 2 and FIG. 3, the coin cells according to the examples exhibited excellent cycle-life, compared with the coin cells according to Comparative Examples 1 to 4.

While this disclosure has been described in connection with what is presently considered to be practical example embodiments, it is to be understood that the disclosure is not limited to the disclosed embodiments. On the contrary, it is intended to cover various modifications and equivalent arrangements included within the scope of the appended claims.

<Description of Symbols>

1:     secondary particle
3:     primary particle
5a:    shell
5b:    core
7:     grain boundary
31:    rechargeable lithium battery
32:    negative electrode
33:    positive electrode
34:    separator
35:    battery case
36:    cap assembly

**Claims**

1.  A positive active material, comprising

    a nickel-based composite metal oxide that is secondary particles in which a plurality of primary particles are agglomerated,
    wherein the nickel-based composite metal oxide comprises a core and a shell,
    the primary particles of the shell are coated with a manganese-containing nickel-based composite metal oxide, and
    the manganese-containing nickel-based composite metal oxide has a layered structure.

2.  The positive active material of claim 1, wherein the core does not include manganese.

3.  The positive active material of claim 1 or claim 2, wherein a manganese concentration has a concentration gradient in which it increases from the inside to the surface of the primary particle of the shell.

4. The positive active material of any one of claims 1 to 3, wherein the coating of manganese coated on the primary particles of the shell is in an island form or in a fine nanoparticle form.

5. The positive active material of any one of claims 1 to 4, wherein the content of manganese in the positive active material is less than about 1.5 mol%.

6. The positive active material of any one of claims 1 to 5, wherein a thickness of the shell is less than or equal to about 2 $\mu$m.

7. The positive active material of any one of claims 1 to 6, wherein the positive active material has a particle diameter of about 8 $\mu$m to about 18 $\mu$m.

8. The positive active material of any one of claims 1 to 7, wherein the manganese-containing nickel-based composite metal oxide is represented by Chemical Formula 1:

[Chemical Formula 1] $LiNi_{1-x-y-z}Co_xMn_yM_zO_2$

wherein, in Chemical Formula 1,
$0 \leq x \leq 0.5$, $0.001 \leq y < 0.015$, $0 \leq z \leq 0.3$, and M is at least one metal element selected from Ni, Al, Cr, Fe, V, Mg, Ti, Zr, Nb, Mo, W, Cu, Zn, Ga, In, Sn, La, B, Ta, Pr, Si, Ba, and Ce.

9. The positive active material of any one of claims 1 to 8, wherein $LiMnO_2$ is included on the surface of the primary particle of the shell.

10. A method of preparing a positive active material, comprising

adding a water-soluble solvent to a nickel-based composite metal compound and a manganese hydroxide to prepare a mixture, wherein the nickel-based composite metal compound includes secondary particles in which a plurality of primary particles are agglomerated, wherein the secondary particles comprise a core and a shell, reacting the mixture at about 40 °C to about 100 °C for about 30 minutes to about 1 hour to coat the primary particles of the shell with manganese, and
mixing the coated resulting material with a lithium source and firing the same.

11. The method of claim 10, wherein the nickel-based composite metal compound is either one of a nickel composite metal oxide and a nickel composite metal hydroxide.

12. The method of claim 10 or claim 11, wherein the water-soluble solvent comprises any one of NaOH, KOH, and mixtures thereof.

13. The method of any one of claims 10 to 12, wherein after reacting the mixture at about 40 °C to about 100 °C for about 30 minutes to about 1 hour, the mixture is dried at about 100 °C to about 200 °C.

14. The method of any one of claims 10 to 13, wherein a firing temperature is about 600 °C to about 800 °C and a firing time is about 8 hours to about 30 hours.

15. A rechargeable lithium battery, comprising

a positive electrode comprising the positive active material of any one of claims 1 to 9;
a negative electrode comprising a negative active material; and
an electrolyte.

FIG. 1

# FIG. 2

# FIG. 3

**EP 4 098 625 A1**

Application Number

EP 22 15 8858

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHI HUA ET AL: "Core-shell structured Li[(Ni0.8Co0.1Mn0.1)0.7(Ni0.45Co0.1Mn0.45)0.3]O2 cathode material for high-energy lithium ion batteries", JOURNAL OF ALLOYS AND COMPOUNDS, vol. 587, 1 February 2014 (2014-02-01), pages 710-716, XP055949632, CH ISSN: 0925-8388, DOI: 10.1016/j.jallcom.2013.10.226 | 1,6-8, 10-15 | INV. C01G53/00 H01M4/00 |
| Y | * the whole document * | 1-15 | |
| X | TAN CHAOPU ET AL: "Core-shell structured Li[(Ni0.9Co0.05Al0.05)0.6(Ni0.4Co0.2Mn0.4)0.4]O2cathode material for high-energy lithium ion batteries", IONICS, KIEL, DE, vol. 24, no. 5, 31 October 2017 (2017-10-31), pages 1293-1304, XP036485013, ISSN: 0947-7047, DOI: 10.1007/S11581-017-2311-7 [retrieved on 2017-10-31] | 1,6-8, 10-15 | |
| Y | * page 1296; figure 1; examples (a)-(d) * | 1-15 | TECHNICAL FIELDS SEARCHED (IPC)<br><br>C01G<br>H01M |
| X | PEIYU HOU ET AL: "Design, preparation and properties of core-shelled Li{[NiyCo1-2yMny](1-x)}core{[Ni1/2Mn1/2]x}shellO2 (0≤x≤0.3, 6y+3x-6xy=2) as high-performance cathode for Li-ion battery", ELECTROCHIMICA ACTA, vol. 133, 1 July 2014 (2014-07-01), pages 589-596, XP055169303, ISSN: 0013-4686, DOI: 10.1016/j.electacta.2014.04.066 | 1,6-8, 10-15 | |
| Y | * page 591; figure 2; examples (a)-(h) * | 1-15 | |
| | -/-- | | |

The present search report has been drawn up for all claims

| Place of search | Date of completion of the search | Examiner |
|---|---|---|
| Munich | 8 August 2022 | Timmermans, Michel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

**Application Number**

EP 22 15 8858

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TONGCHAO LIU ET AL: "Prospect and Reality of Concentration Gradient Cathode of Lithium-ion Batteries", CHINESE J. STRUCT. CHEM, vol. 38, no. 11, 1 January 2019 (2019-01-01), pages 1909-1915, XP055949884, DOI: 10.14102/j.cnki.0254-5861.2011-2512 | 1,6-8, 10-15 | |
| Y | * page 1911, column 1, paragraph 3; figure 2(a) * | 1-15 | |

----

TECHNICAL FIELDS
SEARCHED (IPC)

The present search report has been drawn up for all claims

| Place of search | Date of completion of the search | Examiner |
|---|---|---|
| Munich | 8 August 2022 | Timmermans, Michel |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................
& : member of the same patent family, corresponding
    document

EPO FORM 1503 03.82 (P04C01)